# EUROPEAN PATENT APPLICATION

(11) **EP 4 365 739 A1**
(43) Date of publication of application: **08.05.2024**
(21) Application number: 23186960.3
(22) Date of filing: 21.07.2023
(51) Int. Cl.: G06F 9/50

(54) **COMPUTATIONAL STORAGE RESOURCE QUOTA MANAGEMENT**

(30) Priority: 04.11.2022 US 202263422918 P; 06.01.2023 US 202318094342
(71) Applicant: Samsung Electronics Co., Ltd., Suwon-si, Gyeonggi-do 16677 (KR)
(72) Inventor: HONG, Ilgu, San Jose, CA, 95134 (US); CHOI, Changho, San Jose, CA, 95134 (US)
(74) Representative: Kuhnen & Wacker Patent- und Rechtsanwaltsbüro PartG mbB

(57) **Abstract**

A computational storage unit is described. The computational storage unit may include a first resource of a first type and a second resource of the first type. A table may map a user identifier, UID, for a user to a number of resources of the first type.

## Description

### RELATED APPLICATION DATA

### FIELD

The disclosure relates generally to computational storage devices, and more particularly to managing resources in computational storage devices.

### BACKGROUND

Computational storage units may provide for near-data processing. A user may request that execution engines execute programs for a user. These programs may utilize resources of the computational storage unit, such as memory and/or programming slots.

A need remains to manage the usage of computational storage unit resource.

### SUMMARY

Embodiments of the disclosure include a computational storage unit that may limit resources allocated to a user. A table may map a user identifier to a Service Level Agreement (SLA). The SLA may identify how many resources of the computational storage unit to which the user may be allocated. The invention is defined in the appended claims.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a system including a computational storage unit that may limit the resources used by a user, according to embodiments of the disclosure.
FIG. 2 shows details of the machine of FIG. 1, according to embodiments of the disclosure.
FIG. 3 shows details of the computational storage unit of FIG. 1, according to embodiments of the disclosure.
FIG. 4 shows tables used by the computational storage unit of FIG. 1 to determine the Service Level Agreement (SLA) for the user, according to embodiments of the disclosure.
FIG. 5 shows a table used by the computational storage unit of FIG. 1 to track resources used by the user, according to embodiments of the disclosure.
FIG. 6 shows data structures created or used in response by the computational storage unit of FIG. 1 in response to an open session request from a user, according to embodiments of the disclosure.
FIG. 7 shows a high level flowchart of how the computational storage unit of FIG. 1 responds to a resource request from the user, according to embodiments of the disclosure.
FIG. 8 shows a high level flowchart of how the computational storage unit of FIG. 1 reclaims resource, according to embodiments of the disclosure.
FIG. 9 shows a flowchart of an example procedure for the computational storage unit of FIG. 1 to process the request of FIG. 6 from a user, according to embodiments of the disclosure.
FIG. 10 shows a flowchart of an example procedure for the computational storage unit of FIG. 1 to limit the resources allocated to a user, according to embodiments of the disclosure.
FIG. 11 shows a flowchart of an example procedure for the computational storage unit of FIG. 1 to determine the resource limits for a user, according to embodiments of the disclosure.
FIG. 12 shows a flowchart of an example procedure for the computational storage unit of FIG. 1 to track resources allocated to a user, according to embodiments of the disclosure.
FIG. 13 shows a flowchart of an example procedure for the computational storage unit of FIG. 1 to reclaim resources, according to embodiments of the disclosure.
FIG. 14 shows a flowchart of an example procedure to define or update the tables of FIG. 4 for the computational storage unit of FIG. 1, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Computational storage units (CSUs) may provide for execution of programs near to the storage device storing the data. An application (which may be executing on behalf of a user) may request that the CSU execute one or more operations. By offering near-storage execution of programs, the CSU may access the data more efficiently. The CSU may avoid the need to transfer the data from the storage device to memory, and may avoid using host processor cycles to execute.

But CSU resources may be limited. That is, the number of execution engines, programing slots, and/or memory within the CSU may be finite. A single application may request the use of enough resources of the CSU to block other applications from being able to use the CSU. Such use of resources may be done either maliciously or accidentally.

Embodiments of the disclosure address these problems by assigning each user a Service Level Agreement (SLA). The SLA may specify the number of resources the user (and any application being executed on behalf of the user) may use. By limiting each user to a maximum number of resources, other resources may be kept available for other users.

Embodiments of the disclosure enable multiple users to have the same SLA. By permitting multiple users to be assigned to the same SLA, management of resource limits may be simplified: all users assigned to the same SLA may have their resource limits changed by changing the resource limits associated with the SLA rather than with individual users. Note that in some embodiments of the disclosure, each user may have their own set of resources: that two users might both have the same resource limit does not necessarily imply that both users combined are limited to that number of resources (although embodiments of the disclosure might implement resource limits in that manner).

Embodiments of the disclosure may track resources used by users. If a user requests more resources that are permitted by the resource limits, embodiments of the disclosure may return an error should the user request additional resources.

Embodiments of the disclosure may periodically check that resources allocated to users are still being used. If resources are not currently being used by the user, embodiments of the disclosure may reclaim the resources not being used.

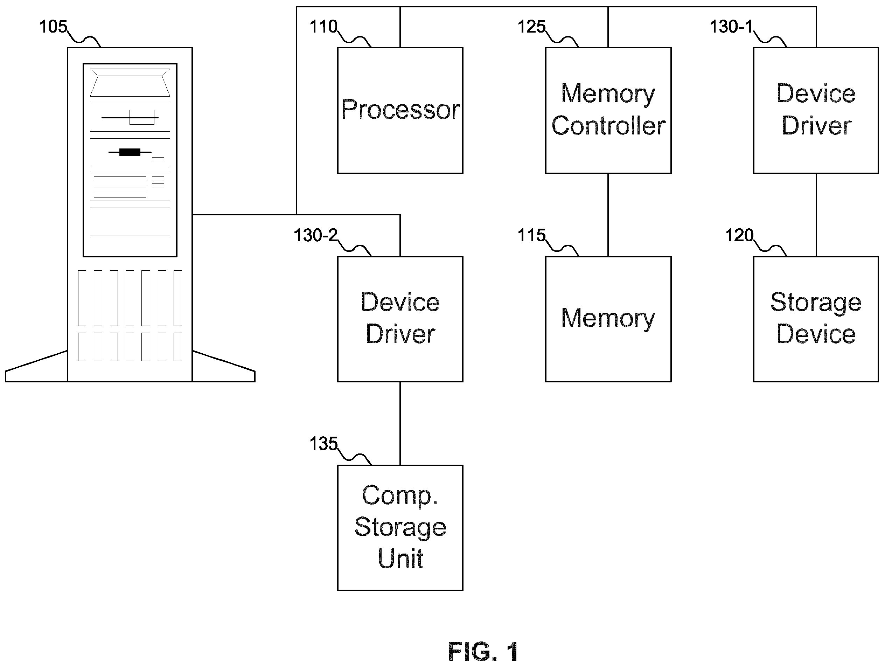

FIG. 1 shows a system including a computational storage unit that may limit the resources used by a user, according to embodiments of the disclosure. In FIG. 1, machine 105, which may also be termed a host or a system, may include processor 110, memory 115, and storage device 120. Processor 110 may be any variety of processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115. When storage device 120 is used to support applications reading or writing data via some sort of file system, storage device 120 may be accessed using device driver 130-1. While FIG. 1 shows one storage device 120, there may be any number of storage devices in machine 105. Storage device 120 may support any desired protocol or protocols, including, for example, the Non-Volatile Memory Express (NVMe) protocol. Different storage devices 120 may support different protocols and/or interfaces. For example, storage device 120 might support a cache coherent interconnect protocol, which may support both block-level protocol (or any other higher level of granularity) access and byte-level protocol (or any other lower level of granularity) access to data on storage device 120. An example of such a cache coherent interconnect protocol is the Compute Express Link (CXL) protocol, which supports accessing data in blocks using the CXL.io protocol and accessing data in bytes using the CXL.mem protocol. In this manner, data on a CXL storage device may be accessed as either block-level data (like a Solid State Drive (SSD)) or byte-level data (such as a memory): the CXL storage device may be used to extend the system memory. In some embodiments of the disclosure, the CXL storage device may function solely to extend the system memory; in other embodiments of the disclosure, the CXL storage device may be used both to extend system memory and to function as a storage device (that is, to process file system requests to access data on the storage device).

While FIG. 1 uses the generic term "storage device", embodiments of the disclosure may include any storage device formats that may benefit from the use of computational storage units, examples of which may include hard disk drives and SSDs. Any reference to "SSD" below should be understood to include such other embodiments of the disclosure. Further, different types of storage devices may be mixed. For example, one storage device 120 might be a hard disk drive, and another storage device 120 might be an SSD.

Machine 105 may be connected to a network (not shown in FIG. 1). The network may be any variety of network. The network may be a wired network or a wireless network. The network may be a Local Area Network (LAN), a Wide Area Network (WAN), a Metropolitan Area Network (MAN), or a world-wide network, such as the Internet, among other possibilities. The network may also include portions that may be different types of networks. For example, the network might include a wired portion and a wireless portion, or the network might include various LANs connected by the Internet.

To interface with the network, machine 105 may have a component (not shown in FIG. 1) to interface with the network. This component may be, for example, a network interface card.

Machine 105 may also include computational storage unit 135 (which may also be referred to as computational storage device 135, among other possible terms). Computational storage unit 135 may provide additional processing capability beyond that offered by processor 110. Computational storage unit 135 may offer any desired functionality. For example, in some embodiments of the disclosure, computational storage unit 135 may provide for offloading of processing from processor 110, which may free processor 110 to perform other tasks. In addition, in some embodiments of the disclosure, computational storage unit 135 may be used for near-data processing, accessing data from storage device 120 rather than having to load data from storage device 120 into memory 115 before processor 110 may process the data. In some embodiments of the disclosure, computational storage unit 135 may be separate from storage device 120 as shown; in other embodiments of the disclosure, computational storage unit 135 may be combined with storage device 120 into a single component. Computational storage unit 135 may be implemented in any desired manner, including, for example, a Field Programmable Gate Array (FPGA), an Application-Specific Integrated Circuit (ASIC), a Graphics Processing Unit (GPU), a General Purpose GPU (GPGPU), a Tensor Processing Unit (TPU), a Neural Processing Unit (NPU), or a Central Processing Unit (CPU) running appropriate software, among other possibilities.

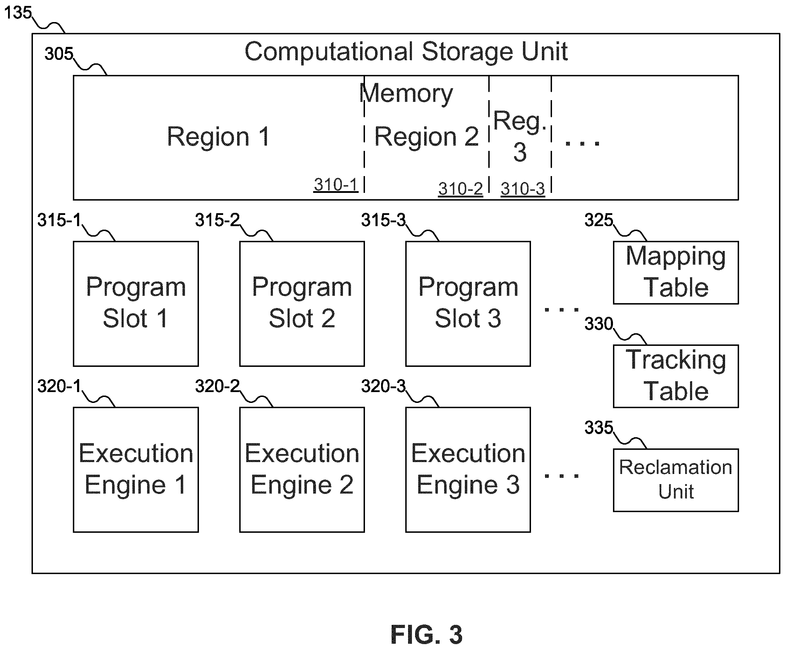

Just as storage device 120 may be accessed using device driver 130-1, computational storage unit 135 may be accessed using device driver 130-2. (Device drivers 130-1 and 130-2 may be referred to collectively as device drivers 130 or drivers 130.) Device drivers 130 may provide a mechanism for the operating system of machine 105 to send requests to particular devices (such as storage device 120 and/or computational storage unit 135). In some embodiments of the disclosure, device drivers 130 may be implemented in a manner that enables a single device driver 130 to communicate with multiple components: in such embodiments of the disclosure, device drivers 130-1 and 130-2 may be the same device driver 130. Computation storage unit is discussed further with reference to FIG. 3 below.

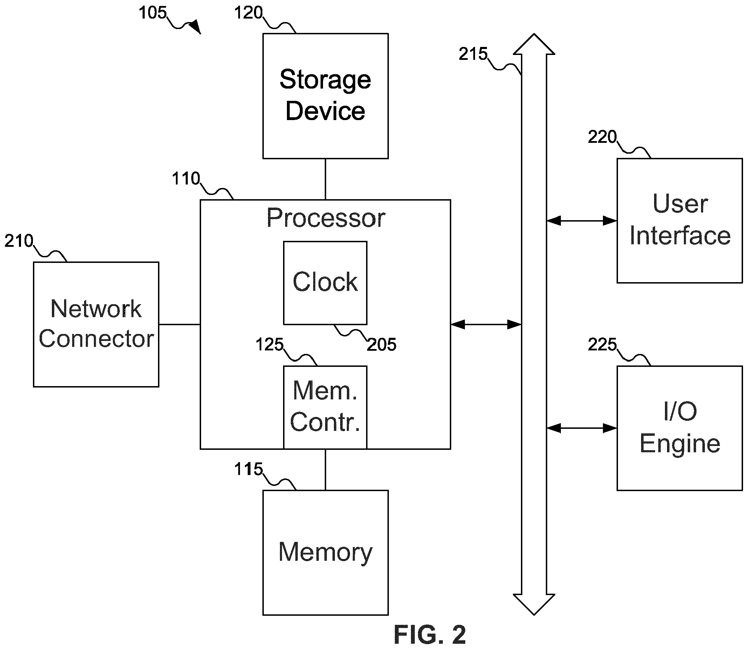

FIG. 2 shows details of the machine of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3 shows details of computational storage unit 135 of FIG. 1, according to embodiments of the disclosure. In FIG. 3, computational storage unit 135 may include memory 305. Memory 305, like memory 115 of FIG. 1, may be any desired form of memory, including, for example, DRAM or SRAM. Memory 305 may be of any size: for example, memory 305 might be 1 megabyte (MB) or 8 gigabytes (GB).

Memory 305 may be divided into regions. For example, in FIG. 3, memory 305 is shown as divided into three regions 310-1, 310-2, and 310-3 (which may be referred to collectively as regions 310). As may be seen, region 310-1 is relatively large (approximately 44% of memory 305), region 310-2 is relatively smaller (approximately 25% of memory 305), and region 310-3 is even smaller (approximately 13% of memory 305). In general, each region 310 of memory 305 may be of any desired size and may differ from the sizes of any other regions 310 of memory 305: the only limitation is that the sum of the sizes of regions 310 may not exceed the total size of memory 305. (In some embodiments of the disclosure, a portion of memory 305 may be reserved for use by computational storage unit 135, in which case the size of the sizes of regions 310 may always be less than the total size of memory 305.) While FIG. 3 shows memory 305 divided into three regions 310, embodiments of the disclosure may support dividing memory 305 into any number (zero or more) of regions 310 (there might be no regions 310 in situations where there are no open sessions using computational storage unit 135).

FIG. 3 also shows regions 310 as being contiguous: that is, there are no gaps between adjacent regions. For example, region 310-1 may end one address, and region 310-2 may start at the next address, with regions 310-2 and 310-3 similarly adjacent. But in some embodiments of the disclosure, memory 305 may be allocated into regions 310 that are not contiguous. This situation may arise either by design or by accident. For example, computational storage unit 135 might allocate regions 310-1 and 310-3 in response to consecutive requests from users, and may leave region 310-2 unallocated. Or, computational storage unit 135 might allocate regions 3 10-1, 3 10-2, and 310-3 in response to consecutive requests, but the application that requested region 310-2 might have completed and deallocated region 310-2, leaving a gap between regions 310-1 and 310-3.

When a user (or perhaps an application running at the request of a user) requests memory from computational storage unit 135, computational storage unit 135 (or a controller thereof, not shown in FIG. 3) may allocate a region 310 of memory 305 to the user. That is, a new region 310 may be established in memory 305, which may be allocated to the user.

It may happen that a user already is using a region 310 of memory 305 in computational storage unit 135, and may request additional memory. Provided that the user is entitled to use more of memory 305, in some embodiments of the disclosure, the user's existing region 310 may be expanded; in other embodiments of the disclosure, a second region 310 may be allocated to the user. So, for example, regions 310 might each be allocated to a different user, or regions 310-1 and 310-3 might be allocated to one user and region 310-2 allocated to a different user. (If regions 310-1 and 310-2 were both allocated to the same user, it might be simpler to combine them into a single contiguous region.)

Memory 305 may act as local memory within computational storage unit 135 that may be used by processes executing on computational storage unit 135. But memory is just one potential resource within computational storage unit 135. Another potential resource of computational storage unit 135 (or alternatively, computational storage unit resource or computational storage device resource) is program slots 315-1 through 315-3 (which may be referred to collectively as program slots 315). Program slots 315 may represent locations where programs may be loaded into computational storage unit 135. For example, an application may have a specific program to run on data stored in memory 305 (more specifically, a region 310 of memory 305): the application may download the program into a program slot 315 and request its execution. As such, program slots 315 may represent additional memory locations, but used for programs rather than for data. The programs that may be loaded into program slots 315 may be custom programs requested by the application, or they may be standard programs available within computational storage unit 135 (and may be loaded into program slots 315 from other storage, not shown in FIG. 3, within computational storage unit 135).

FIG. 3 shows three program slots 315, but embodiments of the disclosure may include any number (zero or more) of program slots. (Computational storage unit 135 might have no program slots 315 if, for example, computational storage unit 135 only permits execution of pre-installed programs, that may be run directly from their storage locations rather than being loaded into program slots 315, although it could be viewed that the pre-installed locations are themselves program slots 315.) In addition, while FIG. 3 suggests that program slots 315 are all the same size, some embodiments of the disclosure might support program slots 315 of varying size, in which case program slots 315 may be allocated to the user based on the desired size, or program slots 315 may be allocated like regions 310 of memory 305.

Another potential resource within computational storage unit 135 are execution engines 320-1 through 320-3 (which may be referred to collectively as execution engines 320). Execution engines 320 may be processors (or processing cores) that may be used to execute programs, such as may be loaded into program slots 315. That is, a program loaded into program slots 315 may be executed using execution engines 320. FIG. 3 shows three execution engines 320, but embodiments of the disclosure may include any number (zero or more) of execution engines 320. (Computational storage unit 135 might have no execution engines 320 if, for example, computational storage unit 135 only permits execution of pre-installed programs, that may be run directly from their storage locations rather than being run by execution engines 320, although it could be viewed that the pre-installed locations are themselves execution engines 320.) In addition, while FIG. 3 suggests that there may be a one-to-one correspondence between program slots 315 and execution engines 320, in some embodiments of the disclosure the number of program slots 315 and execution engines 320 may differ: for example, if some execution engines 320 are dedicated for pre-installed programs rather than downloadable programs.

Resources, such as memory 305 of FIG. 3, program slot 315, or execution engine 320, may be thought of as being organized into types. For example, memory 305 is one type of resource, as are program slot 315 and execution engine 320. Memory 305, program slot 315, and execution engine 320 are merely examples of types of resources that may be offered by computational storage unit 135: there may be other types of resources offered by computational storage unit 135, either in addition to or instead of some or all of memory 305, program slot 315, and execution engine 320. In general, it may not matter which specific instance of the resource is allocated to the user, as long as the instance is of the correct type. Thus, for example, the user might not care if he or she is allocated memory region 310-1, 310-2, or 310-3, as long as the correct amount of memory 305 is allocated. Similarly, the user might not care if he or she is allocated program slot 315-1, 315-2, or 315-3, or if he or she is allocated execution engine 320-1, 320-2, or 320-3. On the other hand, the user might care if he or she requested program slot 315 but was allocated instead execution engine 320, since the allocated resource would be of the wrong type.

In some embodiments of the disclosure, there may be differences between specific instances of resources. For example, program slot 315-1 might offer more storage for a program than program slot 315-2. In that case, either the user may request a particular instance of a resource (either by identifying that particular resource in some manner, or specifying properties, such as size, of the resource desired) to ensure the user receives the appropriate resource, or the resources may be further subdivided within each type. For example, rather than allocating memory 305 to suit the user's request, memory 305 could be subdivided into regions of various sizes in advance (which may be fixed sizes), and each size may be described as a different type that may be requested by the user.

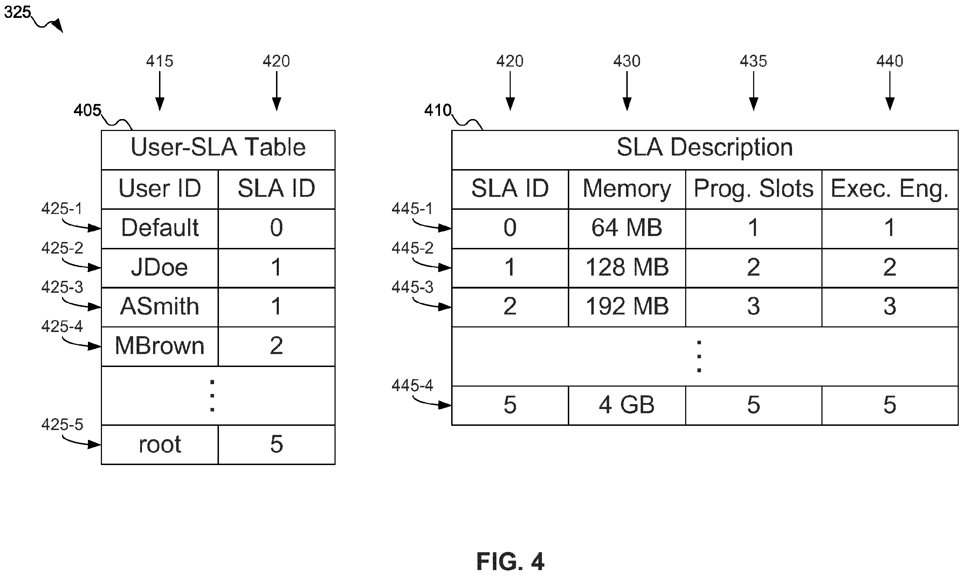

Computational storage unit 135 may also include mapping table 325, tracking table 330, and reclamation unit 335. Mapping table 325 may be used to determine the resource limits for a user. The user's resource limits may be established independently for each user, or may be based on their Service Level Agreement (SLA), with all users that have a common SLA have the same resource limits. Mapping table is discussed further with reference to FIG. 4 below.

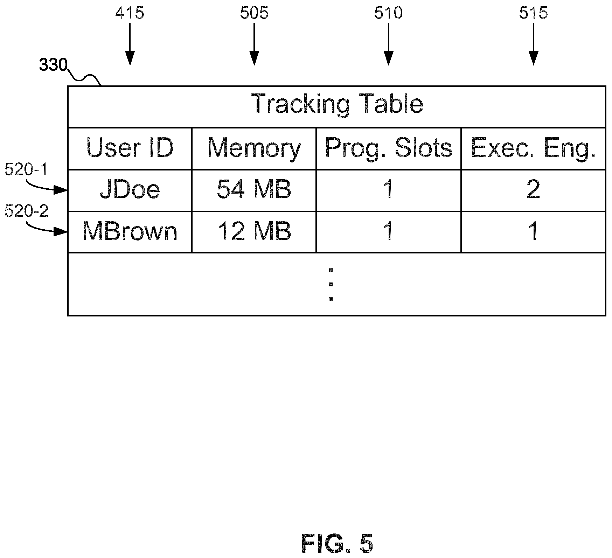

Tracking table 330 may be used to track the resources allocated to particular users. For example, for a given user, tracking table 330 may track how much memory 305 (and potentially what regions 310) have been allocated to that user, how many program slots 315 (and which program slot numbers) have been allocated to that user, and/or how many execution engines 320 (and which execution engine numbers) have been allocated to that user. Tracking what resources have been allocated to a user may be used, for example, when the user issues a request for additional resources (to ensure that the user does not exceed his or her resource limits), and/or to identify resources that may be reclaimed if the user does not deallocate resources properly. Tracking table 330 is discussed further with reference to FIG. 5 below.

Reclamation unit 335 may be used to reclaim resources that have been allocated to a user but are no longer being used. For example, a user might be running an application that uses some resources of computational storage unit 135. But if the application does not release resources (as it should) when they are no longer needed, or if the application terminates unexpectedly (for example, if the process is not responding and is killed), the resources may remain allocated to a user that is no longer using the resources. Reclamation unit 335 may be used to identify such resources and reclaim them so that they may be allocated again to other user.

FIG. 4 shows tables used by computational storage unit 135 of FIG. 1 to determine the Service Level Agreement (SLA) for the user, according to embodiments of the disclosure. In FIG. 4, table 325 is shown. In fact, in FIG. 4, table 325 is implemented as two tables 405 and 410, but as discussed further below, some embodiments of the disclosure may combine tables 405 and 410 into a single table. Any reference below to either tables 405 and 410, or to mapping table 325 of FIG. 3, may be understood as including a reference to the other, since the functions of the tables are the same: only the structure of the table(s) differs.

Table 405 may map user identifiers to SLA identifiers. Table 405 may include user identifiers 415 and SLA identifiers 420. Entries 425-1 through 425-5 (which may be referred to collectively as entries 425) may map individual user identifiers 415 to SLA identifiers 420. For example, entry 425-1 may map a default user identifier to an SLA level 0, entry 425-2 may map a user identifier "JDoe" to an SLA level 1, and so on up to entry 425-5, which may map a user identifier "root" to an SLA level 5.

Note that table 405 includes two special user identifiers: "default" (in entry 425-1) and "root" (in entry 425-5). A user that does not have a specific associated SLA level may be limited to the default resource limits. That is, if table 405 does not include an entry 425 for a particular user identifier 425, then the default entry 425-1 may be used for that user.

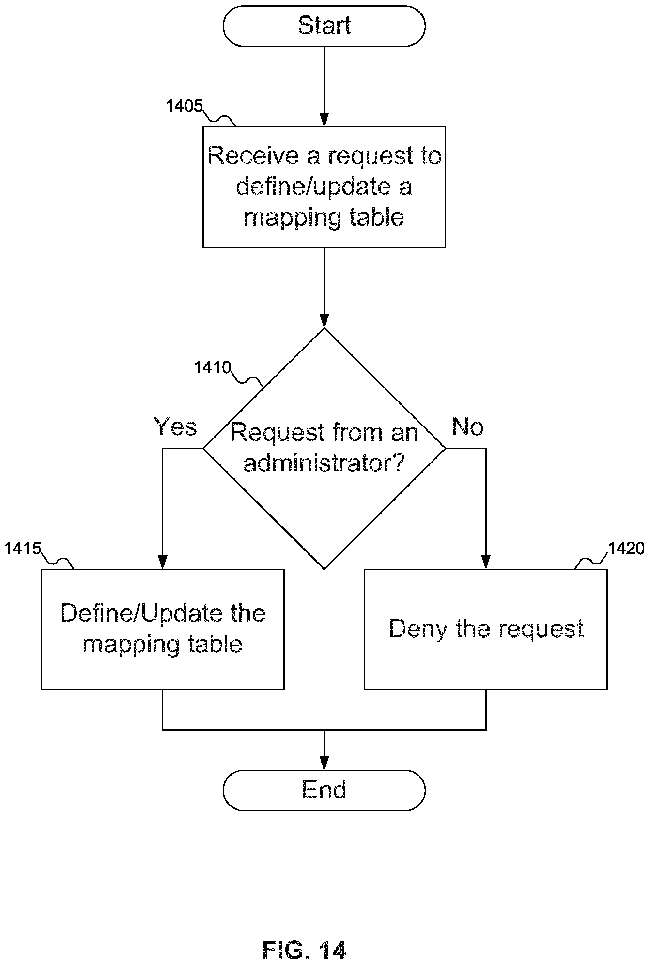

"Root" (in entry 425-5) may represent the administrator user identifier. That is, "root" may be the user identifier associated with an administrator of the system. When an administrator is logged into the system, they may use the root account. The root account may have special permissions not associated with other user accounts: for example, the ability to configure tables 405 and 410, as described with reference to FIG. 14 below.

While FIG. 4 shows table 405 as including textual user identifiers 415, embodiments of the disclosure may use other ways to identify users. For example, user identifiers 415 might be numerical identifiers used by the operating system. In addition, while FIG. 4 shows table 405 as including five entries 425, embodiments of the disclosure may have table 405 including any number (zero or more) of entries 425.

Table 410 may map SLA identifiers to resource limits. Table 410 may include SLA identifier 420, memory size 430, number 435 of program slots, and number 440 of execution engines. Entries 445-1 through 445-4 (which may be referred to collectively as entries 445) may map individual SLA identifiers 420 to the various resource limits for that SLA level. For example, entry 445-1 may map SLA level 0 to 64 MB of memory, one program slot, and one execution engine, whereas entry 445-5 may map SLA level 5 to 4 GB of memory, 5 program slots, and 5 execution engines.

While FIG. 4 shows table 410 as including memory size 430, number of program slots 435, and number of execution engines 440, embodiments of the disclosure may use other resource limits, depending on computational storage unit 135 of FIG. 1. For example, table 410 might include only a subset of these resources. In addition, while FIG. 4 shows table 410 as including four entries 445, embodiments of the disclosure may have table 405 including any number (zero or more) of entries 445.

By using both tables 405 and 410, it may be possible to simplify resource management. Each user may have a particular SLA level, which in turn may specify the particular resource limits that are applicable. The number of SLA levels may be a relatively small number as compared with the number of users of the system.

For example, assume that the system has 1000 users, with each user identifier 415 needing 2 bytes (16 bits), and assume that the system supports six different SLA levels. Each SLA identifier 420 may be represented using 4 bits. If each SLA level includes a maximum allocated memory size 430 (which may need 16 bits to represent a number of megabytes of storage), a number of program slots 435 (which may need 4 bits), and a number of execution engines 440 (which may need another 4 bits), the total storage needed for an SLA level may be 28 bits. Thus, the total storage required for table 410 may be (4 + 16 + 4 + 4) × 6 = 168 bits (21 bytes), and the total storage required for table 405 may be (32 + 4) × 1000 = 36,000 bits (4500 bytes). On the other hand, if the two tables are combined into one (associating each user identifier 415 directly with maximum allocated memory size 430, number of program slots 435, and number of execution engines 440, then the total storage for the combined table is (32 + 16 + 4 + 4) × 1000 = 56,000 bits (7000 bytes). Thus, using table 405 to map user identifiers 415 to SLA identifiers 420, and table 410 to map SLA identifiers 420 to the individual resource limits, the total storage required may be reduced. But combining tables 405 and 410 into a single table may allow for greater flexibility: for example, different user identifiers 415 might have different resource limits, even if the different user identifiers 415 might be associated with the same SLA level.

FIG. 5 shows a table used by computational storage unit 135 of FIG. 1 to track resources used by the user, according to embodiments of the disclosure. In FIG. 5, tracking table 330 (which may also be called a usage table) is shown. Tracking table 330 may include user identifier 415, memory usage 505, programming slots used 510, and execution engines used 515. Tracking table 330 may also include entries, such as entries 520-1 and 520-2 (which may be referred to collectively as entries 520). Each entry 520 may track what resources are being used by a particular user. Thus, for example, entry 520-1 indicates that user "JDoe" is currently using 54 MB of memory 305 of FIG. 3, one programming slot 315 of FIG. 3, and two execution engines 320 of FIG. 3, whereas entry 520-2 indicates that user "MBrown" is currently using 12 MB of memory 305 of FIG. 3, one programming slot 315 of FIG. 3, and one execution engine 320 of FIG. 3.

While FIG. 5 shows tracking table 330 as including two entries 520, embodiments of the disclosure may support tracking table 330 including any number (zero or more) of entries 520. Tracking table 330 might have no entries 520 if, for example, entries 520 are deleted when users finish using computational storage unit 135 of FIG. 1: if no users are currently using computational storage unit 135 of FIG. 1, then tracking table 330 might have no entries 520.

There are some points worth noting about tracking table 330. First, note that only user "JDoe" is using the maximum number of any type of resource-in this case, execution engines 320 of FIG. 3 (assuming that the resource limits shown in table 405 and 410 of FIG. 4 represent user "JDoe"'s resource limits). Every other resource is used at less than the maximum number/size, showing that users do not need to always use resources to the maximum extent. Second, note that user "JDoe" is using two execution engines 320 of FIG. 3 but only one program slot 315 of FIG. 3. This situation might arise, for example, if the user is using a built-in program for one of execution engines 320 of FIG. 3 (and so does not need a program slot 315 of FIG. 3 for that execution engine 320 of FIG. 3), or if the user is using the same program in multiple execution engines 320 of FIG. 3 (which might happen if the user is using the same program with different data in parallel).

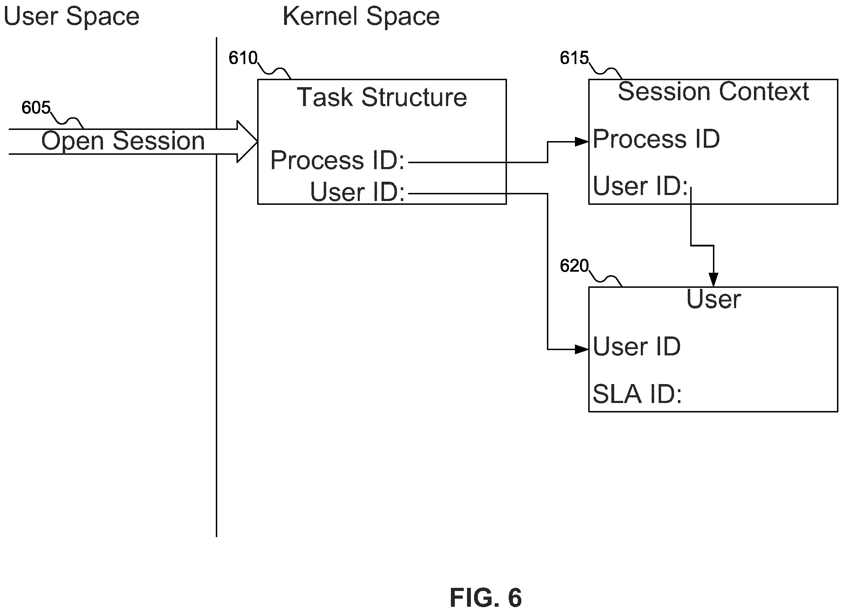

FIG. 6 shows data structures created or used in response by computational storage unit 135 of FIG. 1 in response to an open session request from a user, according to embodiments of the disclosure. In FIG. 6, the user (or an application running under the user's identifier) may issue request 605 to open a session with computational storage unit 135 of FIG. 1. As may be seen, request 605 passes from the user space into the kernel space for processing.

Each task, such as the application running under the user's identifier, may have a task structure, such as task structure 610. Task structure 610 may include the user's identifier and a process identifier. Note that a single user might have multiple processes executing, which might have different process identifiers , but should all have the same user identifier. The process identifier may point to session context 615 created for computational storage unit 135 of FIG. 1. Session context 615 may also include user identifier 415 of FIG. 4. The user identifier 415 of FIG. 4 in task structure 610 and session context 615 may both point to user structure 620 (which may be, for example, entry 425 of FIG. 4 of table 405 of FIG. 4, and which may include SLA identifier 420 of FIG. 4).

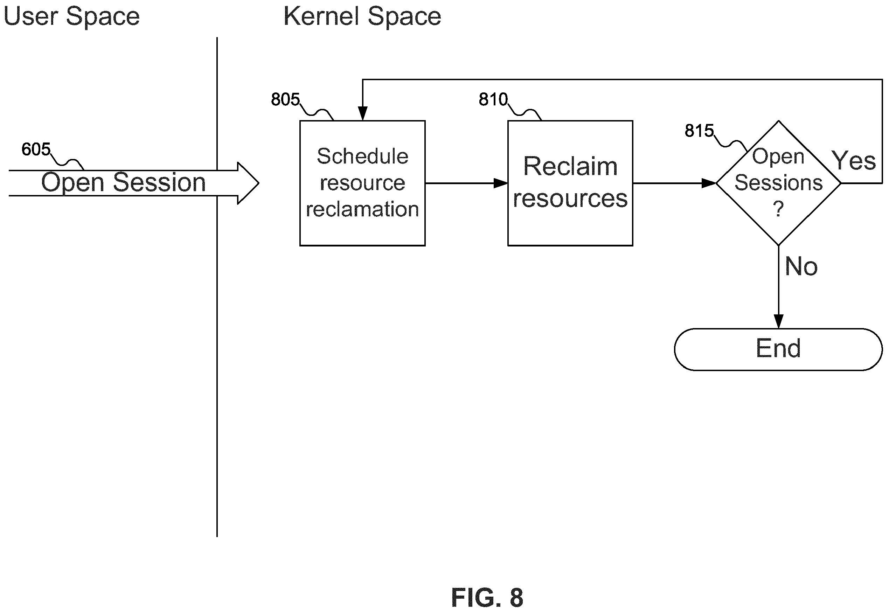

The reason for session context 615 to include the process identifier is to support reclaiming resources, as discussed further with reference to FIG. 8 below.

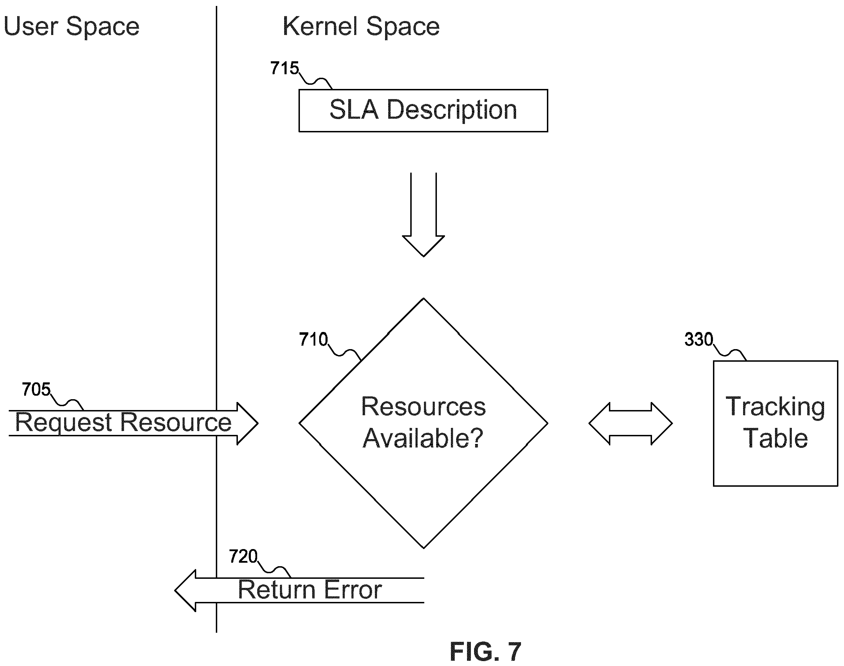

FIG. 7 shows a high level flowchart of how computational storage unit 135 of FIG. 1 responds to a resource request from the user, according to embodiments of the disclosure. In FIG. 7, the user (or an application running under the user's identifier) may issue request 705 to request resources for computational storage unit 135 of FIG. 1. Request 705 may be a request for additional resources beyond what has already been allocated to the user, or request 705 may be for the resources needed as part of request 605 of FIG. 6 (that is, as part of the initial request to use computational storage unit 135 of FIG. 1). As may be seen, request 705 passes from the user space into the kernel space for processing.

At block 710, computational storage unit 135 of FIG. 1 may determine if resources are to be made available to the user. Aside from information about the resources being requested in request 705, block 710 may also factor in SLA description 715, which may indicate the resource limits applicable to the user (that is, entry 445 of FIG. 4 of table 410 of FIG. 4), and tracking table 330 (indicating what resources are currently being used by the user). Of course, if request 705 is part of request 605 of FIG. 6 (that is, request 705 is a request for resources associated with a new session), then tracking table 330 may indicate that no resources are currently allocated to the user.

Block 710 may compare SLA description 715 with the combination of the resources requested in request 705 and those currently allocated to the user in tracking table 330. If the combination of the resources requested in request 705 and those currently allocated to the user in tracking table 330 is greater in some way than SLA description 715, then computational storage unit 135 of FIG. 1 may return error 720, indicating that the user is not entitled to the requested resources. Otherwise, block 710 may update tracking table 330 and allocate the requested resources to the user.

As noted above, the requested resources might exceed the user's resource limits only in part. For example, consider the user "MBrown". As shown in table 330 of FIG. 3, user "MBrown" is currently using 12 MB of memory 305 of FIG. 3, one program slot 315 of FIG. 3, and one execution engine 320 of FIG. 3. If request 705 requests an additional 10 MB of memory 305 of FIG. 3, the request may be granted, since user "MBrown" would not be exceeding the resource limits in tables 405 and 410 of FIG. 4. But if request 705 also requests three execution engines 320 of FIG. 3, then user "MBrown" would be allocated four execution engines 320 of FIG. 3, which would exceed the user's resource limits according to tables 405 and 410 of FIG. 4. In other words, after allocation of the resources requested in request 705, the user should still not exceed any resource limits: if the user would exceed any resource limits, then request 705 should result in error 720.

In some embodiments of the disclosure, request 705 may result in returning error 720 if any resource limits are exceeded. In such embodiments of the disclosure, if request 705 might not be granted even in part, then request 705 might not be allocated at all. In other embodiments of the disclosure, request 705 may result in resources being allocated to the extent they do not exceed the user's resource limits: error 720 might still be returned, but only to indicate that not all requested resources were allocated. In other words, continuing the example above, user "MBrown" could be allocated the additional 10 MB of memory 305 of FIG. 3 and two execution engines 320 of FIG. 3, but not the third requested execution engine 320 of FIG. 3.

While the above discussion focuses on the resources requested by the user and the resource limits applicable to the user, there is another factor to consider: what resources are available. For example, if request 705 asks for, for example, 10 MB of memory 305 of FIG. 3, that request might be within the user's resource limits. But if memory 305 of FIG. 3 has been fully (or nearly fully) allocated, there might not be 10 MB of memory 305 of FIG. 3 to allocate to the user. In that case, block 710 might return error 720 not because request 705 would exceed the user's resource limits but because the requested resources are not available. Thus, block 710 might also factor in what resources are available for allocation to the user: that is, what resources are not currently allocated to any other user.

Request 705 may also release (deallocate) resources previously allocated to the user. By returning resources to computational storage unit 135 of FIG. 1, those resources may be allocated to another user. When resources are being deallocated, there is no need to check whether the user is exceeding his or her resource limits: the user is reducing, not increasing, his or her resource allocation.

Request 705 may also mix a request for new resources and deallocation of existing resources. In such situations, some embodiments of the disclosure may deallocate resources first, then allocate new resources, which may reduce the likelihood that the user may exceed his or her resource limits. But in some embodiments of the disclosure, computational storage unit 135 of FIG. 1 may first allocate new resources, and later deallocate existing resources.

By checking whether request 705 would take the user past his or her resource limits, a given user may be prevented from using too many resources of computational storage unit 135 of FIG. 1. By preventing a user from using too many resources, a malicious user may be prevented from blocking other users from using computational storage unit 135 of FIG. 1 (such as in a denial of service attack).

FIG. 8 shows a high level flowchart of how computational storage unit 135 of FIG. 1 reclaims resource, according to embodiments of the disclosure. In FIG. 8, when a user issues request 605 to open a session, this request may trigger reclamation unit 335 of FIG. 3. When reclamation unit 335 of FIG. 3 is triggered, it may schedule resource reclamation, as shown in block 805. When the scheduled time for resource reclamation is reached, at block 810 reclamation unit may attempt to reclaim resources. Finally, at block 815, reclamation unit 335 of FIG. 3 may determine if there are still any open sessions. If there are still open sessions, then reclamation unit 335 of FIG. 3 may schedule another attempted resource reclamation; otherwise (since no resources should be in use if there are no active sessions), reclamation unit 335 of FIG. 3 may end its processing (at least for the time being). In this manner, reclamation unit 335 of FIG. 3 may periodically check to see what resources may be reclaimed. Any periodicity may be used to schedule reclamation unit 335 of FIG. 3: for example, every 30 seconds.

The question as to why resource reclamation may be necessary may arise. In general, resource reclamation should not be necessary. For example, when a user (or an application running on behalf of the user) completes its use of computational storage unit 135 of FIG. 3, it should deallocate (release) the resources back to computational storage unit 135 of FIG. 3, so that the resources may be used by other applications. But this assumes that applications are well-behaved and return resources properly. This assumption is not always correct: some applications might fail to return resources. It might also happen that an application terminates unexpectedly: an error might have occurred that terminated the application, or the user might have killed the application process. In such situations, the application might not be able to deallocate resources back to computational storage unit 135 of FIG. 1.

It is for these reasons that reclamation unit 335 of FIG. 3 may exist. Reclamation unit 335 of FIG. 3 may use the process identifier for the application (or the user identifier) to check whether that process identifier (or that user identifier) is currently being used by the operating system. If the operating system indicates that either the process identifier or user identifier is no longer in use, then there is no application/user that may be actively using the resources. The resources may then be reclaimed by computational storage unit 135 of FIG. 1 and then allocated to other users.

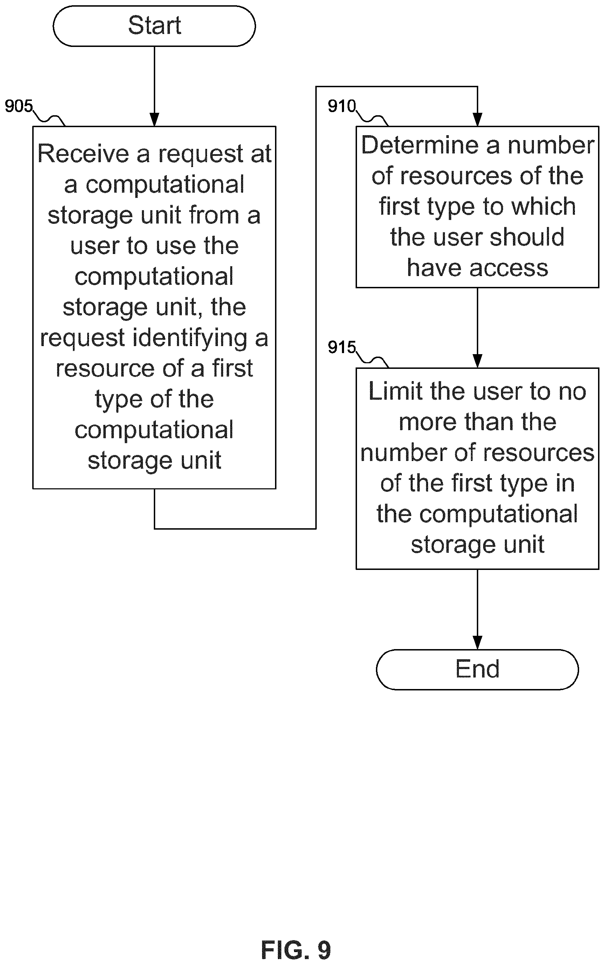

FIG. 9 shows a flowchart of an example procedure for computational storage unit 135 of FIG. 1 to process request 605 of FIG. 6 from a user, according to embodiments of the disclosure. In FIG. 9, at block 905, computational storage unit 135 of FIG. 3 may receive request 605 of FIG. 6 from the user (or an application running for the user). Request 605 of FIG. 6 may identify a resource of computational storage unit 135 of FIG. 1 that the user wants to use. This resource may be of any type, such as memory 305, program slot 315, or execution engine 320 (and, of course, request 605 may request more than one instance of a particular resource type and/or may request multiple different resource types). At block 910, computational storage unit 135 of FIG. 1 may determine a number, such as maximum allocated memory size 430 of FIG. 4, number of program slots 435 of FIG. 4, and/or number of execution engines 440 of FIG. 4, of resources of the requested type that may be allocated to the user given the user's SLA level in tables 405 and 410 of FIG. 4. Finally, at block 915, computational storage unit 135 of FIG. 1 may limit the user to allocating no more than the maximum number of resources to which the user may be allocated, given the user's SLA level in tables 405 and 410 of FIG. 4.

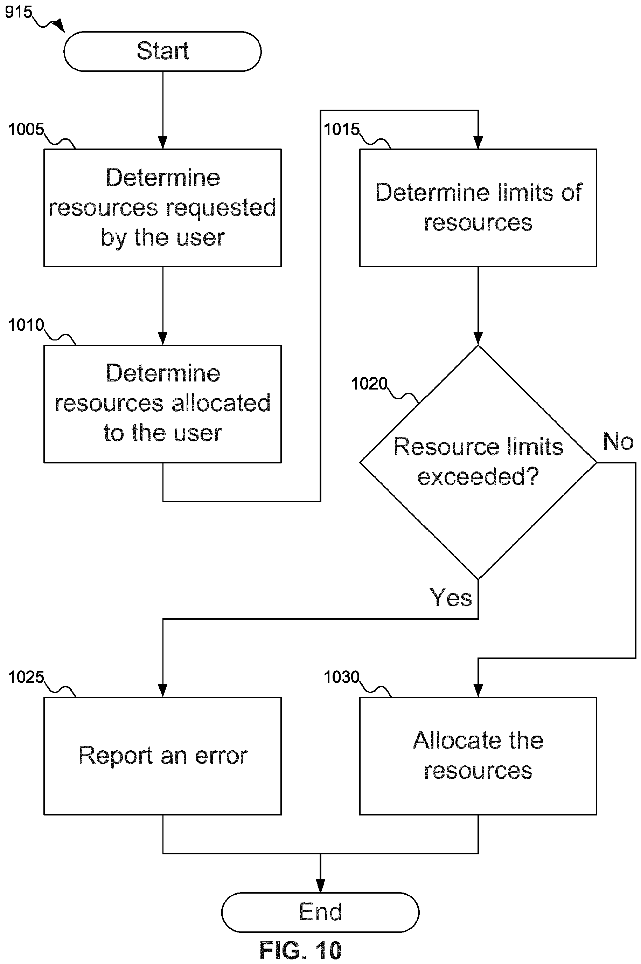

As discussed above, while the user's session using computational storage unit 135 of FIG. 1 continues, the user may issue subsequent requests, such as request 705 of FIG. 7, for additional resources of computational storage unit 135 of FIG. 1. In such situations, computational storage unit 135 of FIG. 1 may revisit whether the user is entitled to the additional resources, aggregating request 605 of FIG. 6 and request 705 of FIG. 7 for purposes of determining whether the user is entitled to the resources requested in request 705 of FIG. 7. How computational storage unit 135 of FIG. 1 performs this determination is discussed with reference to FIG. 10 below.

FIG. 10 shows a flowchart of an example procedure for computational storage unit 135 of FIG. 1 to limit the resources allocated to a user, according to embodiments of the disclosure. FIG. 10 elaborates on the procedure performed in block 915 of FIG. 9.

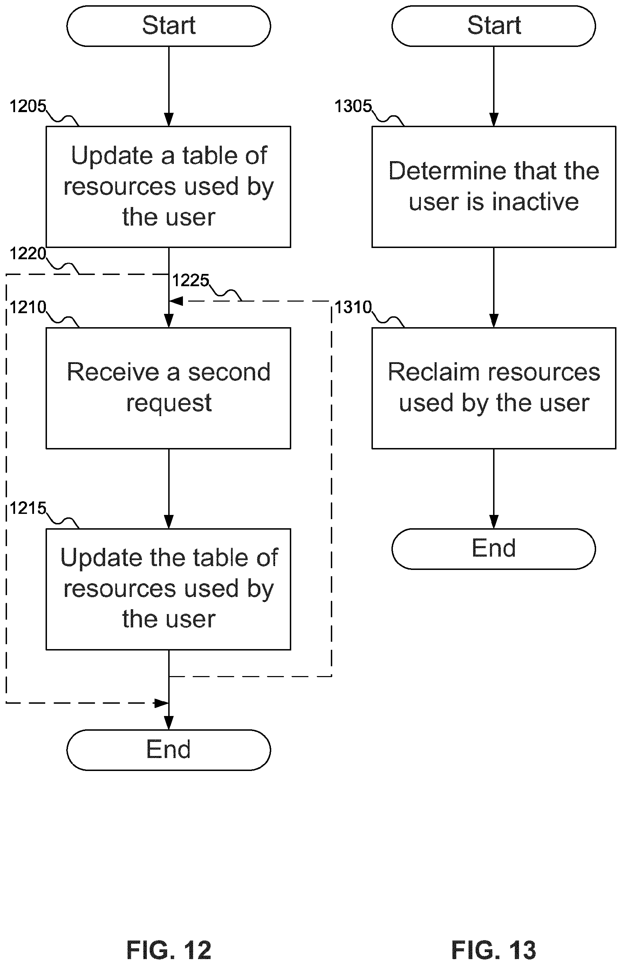

In FIG. 10, at block 1005, computational storage unit 135 of FIG. 1 may determine the resources requested by the user in request 605 of FIG. 6 and/or request 705 of FIG. 7. At block 1010, computational storage unit 135 of FIG. 1 may determine what resources have already been allocated to the user, as stored in tracking table 330 of FIG. 3. If the request being processed is request 605 of FIG. 6, then block 1010 may be expected to determine that no resources have yet been allocated to the user (as tracking table 330 of FIG. 3 should not indicate any resources are allocated to the user before the user has opened a session). At block 1015, computational storage unit 135 of FIG. 1 may determine the resource limits applicable to the user, as stored in tables 405 and 410 of FIG. 4. At block 1020, computational storage unit 135 of FIG. 1 may compare the resource limits as determined in block 1015 with the requested and previously allocated resources as determined in blocks 1005 and 1010. If allocating the resources requested in request 605 of FIG. 6 and/or request 705 of FIG. 7 would result in exceeding the resource limits for the user, then at block 1025, computational storage unit 135 of FIG. 1 may return error 720 of FIG. 7; otherwise, at block 1030, computational storage unit 135 of FIG. 1 may allocate the additional resources to the user (and may update tracking table 330 of FIG. 3, as discussed further with reference to FIG. 12 below.

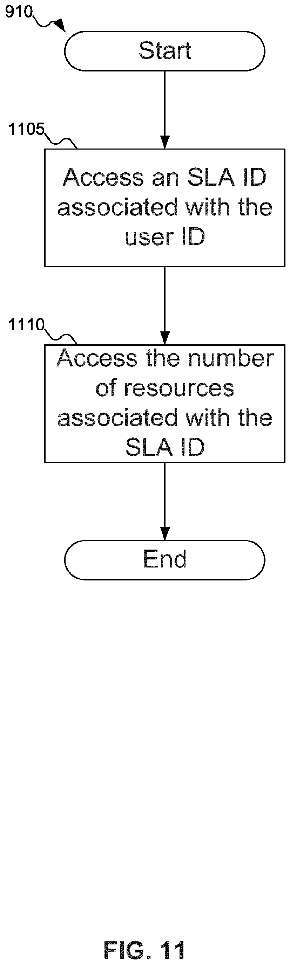

FIG. 11 shows a flowchart of an example procedure for computational storage unit 135 of FIG. 1 to determine the resource limits for a user, according to embodiments of the disclosure. FIG. 11 elaborates on the procedure performed in block 910 of FIG. 9.

In FIG. 11, at block 1105, computational storage unit 135 of FIG. 1 may identify entry 425 of FIG. 4 in table 405 of FIG. 4 for the user. From entry 425 of FIG. 4 in table 405 of FIG. 4, computational storage unit 135 of FIG. 1 may determine SLA identifier 420 of FIG. 4. Then, at block 1110, computational storage unit 135 of FIG. 1 may use SLA identifier 420 of FIG. 4 to determine entry 445 of FIG. 4 for SLA identifier 420 of FIG. 4, from which maximum allocated memory size 430 of FIG. 4, number of program slots 435 of FIG. 4, and/or number of execution engines 440 of FIG. 4 may be determined as the resource limits for the user.

FIG. 12 shows a flowchart of an example procedure for computational storage unit 135 of FIG. 1 to track resources allocated to a user, according to embodiments of the disclosure. In FIG. 12, at block 1205, computational storage unit 135 of FIG. 1 may update tracking table 330 of FIG. 3 based on the resources requested in request 605 of FIG. 6 (and assuming that the user did not request more resources than permitted in request 605 of FIG. 6). At block 1210, computational storage unit 135 of FIG. 1 may receive request 705 of FIG. 7, requesting additional resources of computational storage unit 135 of FIG. 1 for the user. At block 1215, computational storage unit 135 of FIG. 1 may again update tracking table 330 of FIG. 3 based on the resources requested in request 705 of FIG. 7 (and assuming that the user would not exceed his or her resource limits in aggregating request 605 of FIG. 6 and request 705 of FIG. 7).

As may be seen by dashed arrows 1220 and 1225, blocks 1210 and 1215 may either be omitted, or may be repeated as needed.

While the above description focuses on request 705 of FIG. 7 as requesting additional resources, it is also possible that request 705 of FIG. 7 may release resources. For example, the user might need two execution engines to process data, and a region of memory to store the result. Once the result is complete, the user might need to perform further processing, but only need one execution engine to perform that processing. Request 705 of FIG. 7 might then release the no-longer-needed execution engine, so that another user may use that execution engine. If request 705 deallocates resources, then computational storage unit 135 of FIG. 1 may update tracking table 330 of FIG. 3 to reduce the resources allocated to the user. It is also possible that request 705 may mix such requests, both deallocating one resource and requesting allocation of a new resource.

FIG. 13 shows a flowchart of an example procedure for computational storage unit 135 of FIG. 1 to reclaim resources, according to embodiments of the disclosure. In FIG. 13, at block 1305, computational storage unit 135 of FIG. 1 may determine that the user (or at least the application/process that requested resources of computational storage unit 135 of FIG. 1) is no longer active. At block 1310, reclamation unit 335 of FIG. 3 may then reclaim the resources allocated to the user that are no longer being used (because the user or process is no longer active).

FIG. 14 shows a flowchart of an example procedure to define or update the tables of FIG. 4 for computational storage unit 135 of FIG. 1, according to embodiments of the disclosure. In FIG. 14, at block 1405, computational storage unit 135 of FIG. 1 may receive a request to define (that is, initialize or add entries 425 and/or 445 of FIG. 4 for a user, indicating how many of each type of resource may be allocated to the user) or update (that is, change the number of resources that may be allocated to a user in entries 425 and/or 445 of FIG. 4) table 325 of FIG. 3. At block 1410, computational storage unit 135 of FIG. 1 may check to see if the request originated from an administrator of the system (for example, the "root" user account). If so, then at block 1415, table 325 of FIG. 3 may be defined or updated as requested; otherwise, at block 1420, the request may be denied.

In FIGs. 9-14, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may have a computational storage unit that may limit resources allocated to a user. A user identifier may be mapped to resource limits (which may be accomplished by mapping the user identifier to a Service Level Agreement (SLA) identifier, which in turn may be mapped to the resource limits). The computational storage unit may then allocate resources for the user up to the resource limits, and return an error if the user attempts requests resources beyond the limit. Embodiments of the disclosure offer a technical advantage by protecting against a single user (or a small set of users) requesting all the available resources and denying other users use of the computational storage unit.

Computational Storage Devices (CSDs) are designed to offload processing from a host central processing unit (CPU) overhead to a storage device. But while a general interface (Computational Storage Commend Set) may be defined, there is lack of consideration for a resource monopoly attack which may preempt available Computational Storage (CS) resources and result in denial of CS service to other applications.

In some situations, an attacker may take all available CS resource of the CSD through malicious CS applications. As a result, a normal user might not be able to use CS (Computational Storage) services because the normal user might fail to allocate CS resources of the CSD.

Embodiments of the disclosure may address this problem by providing a way to set a quota for each CS resource, to identify a relationship between CS application and a User, to tracking and manage a CS resource usage based on the User, and to reclaim unreleased CS resources from dead/killed CS applications.

### SLA (Service Level Agreement) and CS Resource Quota

To address the Resource Monopoly Attack, embodiments of the disclosure may set CS resource Quotas for each resource. The CSD may expose various type of CS resources such as Memory Regions (which may be used for input/output data buffer or temporary buffer for computation), Program Slots (which may be used save downloaded of fixed program code), and Execution Engine (which may be used for launching download/fixed program to offload CPU overhead of host).

Embodiments of the disclosure may support different options for defining a Quota for a CS resource. For example, a predetermined fixed amount may be used as a Quota for each application. But this approach may fail to support some CS applications which require more CS resources than the Quota. Another approach may be to set a resource Quota based on a Service Level Agreement (SLA) level. The CS resource Quota for each SLA level may be defined between the CS service provider and the User, and the CS service provider may assign an SLA level for each user based on billing policy. So it is the responsibility of the service provider to guarantee a predetermined CS resource of the system for the User, and it is the responsibility of the user to estimate the required CS resource and select an SLA level from the CS service provider that provides the estimated required CS resource.

Embodiments of the disclosure may include an interface to set an SLA Quota description Table which may describe the Quota of each CS resource type for each SLA level, and an SLA-User mapping table which may describe the SLA level value of each User. Users that are not otherwise described in the tables may use a default SLA level, such as 0 SLA level.

To protect the tables from the access of an unprivileged user, embodiments of the disclosure may check that the process context belongs to the root (admin) and only allow to access by the root (admin).

### Session (Resource) Context and User

Embodiments of the disclosure may provide a way to identify a tenant (application) with a Process ID (PID) of process context (task_struct) and use the PID to isolate a CS resource and to authorize access to the CS resource. Internally, a Session (Resource) Context may track CS resources allocated by the CS application.

To track CS resource usage based on the User, embodiments of the disclosure may use a login User ID (UID), from the process context (task struct) and search or create User structures which may save the current CS resource usage of the user. As mentioned before, embodiments of the disclosure may extract a UID from the process context and search for the User object which has the given UID. If the UID is not found, embodiments of the disclosure may create a User structure with the PID and set the service level from the SLA-User mapping table. If the UID is not described in SLA-User mapping table, embodiments of the disclosure may set a default level (0) for the User. A pointer may then be set for the User inside Session Context.

### Track CS resource usage and Prevent Resource Monopoly Attack

For the CS request to allocate or free CS resources of the CS application, embodiments of the disclosure may find a Session Context with the PID of the process context (task struct) and the User, and then may check whether the User has available resources by comparing the CS resource usage of User with the CS resource Quota for the SLA level of the user in the SLA Quota description table. If the User would exceed his/her CS resource Quota, embodiments of the disclosure may respond to the request with a failure. If the User has sufficient space in the CS resource Quote, embodiments of the disclosure may allocate and keep the resource on the Session Context, and then may update the CS resource usage of the User.

### Reclaim CS resources of dead/killed CS application

In a general case, the CS application may Close a session and embodiments of the disclosure may clean up allocated CS resources by the CS application and reduce CS resource usage from the User structure. But the CS application could terminate without a general clean up call: for example, the CS application might be force-killed, or buggy code might result in a critical fault, causing the system to kill the CS application. In that case, the Session Context and the CS resource would remain dangling. To address this issue, embodiments of the disclosure may include a reclaim worker which may be scheduled when the first new session context is created, and may be periodically rescheduled until all session context has removed from system.

When the reclaim worker is triggered it will loop through the session context and find dead/killed CS applications by searching the process context (task struct) with the PID of the session context. If the reclaim worker finds a dead/killed CS application, the reclaim worker may reclaim CS resources of that session context and then update the CS resource usage in the User.

CS resources of an application may be isolated by PID and managed with the Session Context. CS resource usage may be tracked by User structure. The Quota for the CS resource may be set through SLA Quota description table update, and the SLA level of user may be set through SLA-user mapping table update by admin (root). The reclaim worker may be scheduled when open session remains and may find dead/killed CS application and reclaim CS resources.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes a computational storage unit, comprising:
   a first resource of a first type;
   a second resource of the first type;
   a table mapping a user identifier (UID) for a user to a number of resources of the first type.
Statement 2. An embodiment of the disclosure includes the computational storage unit according to statement 1, wherein the computational storage unit is configured to limit the user to the number of resources of the first type.
Statement 3. An embodiment of the disclosure includes the computational storage unit according to statement 1, wherein the resources are execution engines, program slots, or memory regions.
Statement 4. An embodiment of the disclosure includes the computational storage unit according to statement 1, wherein:
   the first resource is a first execution engine;
   the second resource is a second execution engine;
   the computational storage unit further comprises:
      a first program slot;
      a second program slot; and
      a memory; and
   the table is configured to map the UID for the user to the number of execution engines, a second number of program slots, and a size of a region of the memory.
Statement 5. An embodiment of the disclosure includes the computational storage unit according to statement 1, further comprising a device driver.
Statement 6. An embodiment of the disclosure includes the computational storage unit according to statement 5, wherein the device driver includes the table.
Statement 7. An embodiment of the disclosure includes the computational storage unit according to statement 1, wherein the table includes:
   a first table mapping the UID for the user to a Service Level Agreement (SLA) identifier (SLA ID); and
   a second table mapping the SLA ID to the number of resources of the first type.
Statement 8. An embodiment of the disclosure includes the computational storage unit according to statement 1, further comprising a session context indicating that the first resource is used by a session of the user.
Statement 9. An embodiment of the disclosure includes the computational storage unit according to statement 8, further comprising a second table mapping the UID to a number of used resources of the first type of the computational storage unit based at least in part on the session context.
Statement 10. An embodiment of the disclosure includes the computational storage unit according to statement 9, wherein the computational storage unit is configured to limit the number of used resources of the first type to no more than the number of resources of the first type.
Statement 11. An embodiment of the disclosure includes the computational storage unit according to statement 1, wherein the computational storage unit is configured to add an entry to the table mapping the UID to the number of resources of the first type based at least in part on receiving a request by the user to access the computational storage unit.
Statement 12. An embodiment of the disclosure includes the computational storage unit according to statement 1, further comprising a reclamation unit to restatement resources based at least in part on the user being inactive.
Statement 13. An embodiment of the disclosure includes the computational storage unit according to statement 12, wherein the reclamation unit is configured to execute periodically.
Statement 14. An embodiment of the disclosure includes a method, comprising:
   receiving a request at a computational storage unit from a user to use the computational storage unit, the request identifying a resource of a first type of the computational storage unit;
   determining a number of resources of the first type to which the user should have access; and
   limiting the user to no more than the number of resources of the first type in the computational storage unit.
Statement 15. An embodiment of the disclosure includes the method according to statement 14, wherein the resources are execution engines, program slots, or memory regions.
Statement 16. An embodiment of the disclosure includes the method according to statement 14, wherein:
   the resource of the first type is a first execution engine;
   the computational storage unit includes a second execution engine, a first program slot, a second program slot, and a memory; and
   limiting the user to no more than the number of resources of the first type in the computational storage unit includes limiting the user to no more than the first number of execution engines, a second number of program slots, and a size of a region of the memory.
Statement 17. An embodiment of the disclosure includes the method according to statement 14, wherein determining the number of resources of the first type to which the user should have access includes accessing the number of resources of the first type to which the user should have access from a table.
Statement 18. An embodiment of the disclosure includes the method according to statement 17, wherein accessing the number of resources of the first type to which the user should have access from the table includes:
   accessing a Service Level Agreement (SLA) identifier (SLA ID) associated with a user identifier (UID) for the user from the table; and
   accessing the number of resources of the first type associated with the SLA ID from a second table.
Statement 19. An embodiment of the disclosure includes the method according to statement 17, further comprising initializing the table with the number of resources of the first type to which the user should have access.
Statement 20. An embodiment of the disclosure includes the method according to statement 14, wherein initializing the table includes initializing the table based at least in part on a second request from an administrator.
Statement 21. An embodiment of the disclosure includes the method according to statement 14, wherein limiting the user to no more than the number of resources of the first type in the computational storage unit includes:
   determining a second number of resources of the first type requested in the request;
   determining a third number of used resources of the first type; and
   comparing the second number of resources of the first type and the third number of used resources of the first type with the number of resources of the first type.
Statement 22. An embodiment of the disclosure includes the method according to statement 21, wherein limiting the user to no more than the number of resources of the first type in the computational storage unit further includes allocating the second number of resources of the first type to the user based at least in part on the second number of resources of the first type and the third number of used resources of the first type not exceeding the number of resources of the first type.
Statement 23. An embodiment of the disclosure includes the method according to statement 21, wherein limiting the user to no more than the number of resources of the first type in the computational storage unit further includes reporting an error based at least in part on the second number of resources of the first type and the third number of used resources of the first type exceeding the number of resources of the first type.
Statement 24. An embodiment of the disclosure includes the method according to statement 14, further comprising updating a table of resources used by the user based at least in part on the request.
Statement 25. An embodiment of the disclosure includes the method according to statement 24, further comprising:
   receiving a second request at the computational storage unit from the user to use the computational storage unit; and
   updating the table of resources used by the user based at least in part on the second request.
Statement 26. An embodiment of the disclosure includes the method according to statement 25, wherein updating the table of resources used by the user based at least in part on the second request includes:
   determining a second number of resources of the first type requested in the second request;
   determining a third number of used resources of the first type; and
   comparing the second number of resources of the first type and the third number of used resources of the first type with the number of resources of the first type.
Statement 27. An embodiment of the disclosure includes the method according to statement 26, wherein updating the table of resources used by the user based at least in part on the second request further includes allocating the second number of resources of the first type to the user based at least in part on the second number of resources of the first type and the third number of used resources of the first type not exceeding the number of resources of the first type.
Statement 28. An embodiment of the disclosure includes the method according to statement 26, wherein updating the table of resources used by the user based at least in part on the second request includes reporting an error based at least in part on the second number of resources of the first type and the third number of used resources of the first type exceeding the number of resources of the first type.
Statement 29. An embodiment of the disclosure includes the method according to statement 14, further comprising determining that the user is inactive.
Statement 30. An embodiment of the disclosure includes the method according to statement 29, further comprising reclaiming the resource based at least in part on the user being inactive.
Statement 31. An embodiment of the disclosure includes the method according to statement 29, wherein determining that the user is inactive includes periodically determining that the user is inactive.
Statement 32. An embodiment of the disclosure includes the method according to statement 14, wherein:
   receiving the request at the computational storage unit from the user to use the computational storage unit includes receiving the request at the computational storage unit from a process of the user to use the computational storage unit; and
   the method further comprises:
      determining that the process is inactive; and
      reclaiming the resource based at least in part on the process being inactive.
Statement 33. An embodiment of the disclosure includes the method according to statement 32, wherein determining that the process is inactive includes periodically determining that the process is inactive.
Statement 34. An embodiment of the disclosure includes the method according to statement 14, wherein limiting the user to no more than the number of resources of the first type in the computational storage unit includes reporting an error.
Statement 35. An embodiment of the disclosure includes an article, comprising a non-transitory storage medium, the non-transitory storage medium having stored thereon instructions that, when executed by a machine, result in, comprising:
   receiving a request at a computational storage unit from a user to use the computational storage unit, the request identifying a resource of a first type of the computational storage unit;
   determining a number of resources of the first type to which the user should have access; and
   limiting the user to no more than the number of resources of the first type in the computational storage unit.
Statement 36. An embodiment of the disclosure includes the article according to statement 35, wherein the resources are execution engines, program slots, or memory regions.
Statement 37. An embodiment of the disclosure includes the article according to statement 35, wherein:
   the resource of the first type is a first execution engine;
   the computational storage unit includes a second execution engine, a first program slot, a second program slot, and a memory; and
   limiting the user to no more than the number of resources of the first type in the computational storage unit includes limiting the user to no more than the first number of execution engines, a second number of program slots, and a size of a region of the memory.
Statement 38. An embodiment of the disclosure includes the article according to statement 35, wherein determining the number of resources of the first type to which the user should have access includes accessing the number of resources of the first type to which the user should have access from a table.
Statement 39. An embodiment of the disclosure includes the article according to statement 38, wherein accessing the number of resources of the first type to which the user should have access from the table includes:
   accessing a Service Level Agreement (SLA) identifier (SLA ID) associated with a user identifier (UID) for the user from the table; and
   accessing the number of resources of the first type associated with the SLA ID form a second table.
Statement 40. An embodiment of the disclosure includes the article according to statement 38, the non-transitory storage medium having stored thereon further instructions that, when executed by the machine, result in initializing the table with the number of resources of the first type to which the user should have access.
Statement 41. An embodiment of the disclosure includes the article according to statement 35, wherein initializing the table includes initializing the table based at least in part on a second request from an administrator.
Statement 42. An embodiment of the disclosure includes the article according to statement 35, wherein limiting the user to no more than the number of resources of the first type in the computational storage unit includes:
   determining a second number of resources of the first type requested in the request;
   determining a third number of used resources of the first type; and
   comparing the second number of resources of the first type and the third number of used resources of the first type with the number of resources of the first type.
Statement 43. An embodiment of the disclosure includes the article according to statement 42, wherein limiting the user to no more than the number of resources of the first type in the computational storage unit further includes allocating the second number of resources of the first type to the user based at least in part on the second number of resources of the first type and the third number of used resources of the first type not exceeding the number of resources of the first type.
Statement 44. An embodiment of the disclosure includes the article according to statement 42, wherein limiting the user to no more than the number of resources of the first type in the computational storage unit further includes reporting an error based at least in part on the second number of resources of the first type and the third number of used resources of the first type exceeding the number of resources of the first type.
Statement 45. An embodiment of the disclosure includes the article according to statement 35, the non-transitory storage medium having stored thereon further instructions that, when executed by the machine, result in updating a table of resources used by the user based at least in part on the request.
Statement 46. An embodiment of the disclosure includes the article according to statement 45, the non-transitory storage medium having stored thereon further instructions that, when executed by the machine, result in:
   receiving a second request at the computational storage unit from the user to use the computational storage unit; and
   updating the table of resources used by the user based at least in part on the second request.
Statement 47. An embodiment of the disclosure includes the article according to statement 46, wherein updating the table of resources used by the user based at least in part on the second request includes:
   determining a second number of resources of the first type requested in the second request;
   determining a third number of used resources of the first type; and
   comparing the second number of resources of the first type and the third number of used resources of the first type with the number of resources of the first type.
Statement 48. An embodiment of the disclosure includes the article according to statement 47, wherein updating the table of resources used by the user based at least in part on the second request further includes allocating the second number of resources of the first type to the user based at least in part on the second number of resources of the first type and the third number of used resources of the first type not exceeding the number of resources of the first type.
Statement 49. An embodiment of the disclosure includes the article according to statement 47, wherein updating the table of resources used by the user based at least in part on the second request includes reporting an error based at least in part on the second number of resources of the first type and the third number of used resources of the first type exceeding the number of resources of the first type.
Statement 50. An embodiment of the disclosure includes the article according to statement 35, the non-transitory storage medium having stored thereon further instructions that, when executed by the machine, result in determining that the user is inactive.
Statement 51. An embodiment of the disclosure includes the article according to statement 50, the non-transitory storage medium having stored thereon further instructions that, when executed by the machine, result in reclaiming the resource based at least in part on the user being inactive.
Statement 52. An embodiment of the disclosure includes the article according to statement 50, wherein determining that the user is inactive includes periodically determining that the user is inactive.
Statement 53. An embodiment of the disclosure includes the article according to statement 35, wherein:
   receiving the request at the computational storage unit from the user to use the computational storage unit includes receiving the request at the computational storage unit from a process of the user to use the computational storage unit; and
   the non-transitory storage medium has stored thereon further instructions that, when executed by the machine, result in:
      determining that the process is inactive; and
      reclaiming the resource based at least in part on the process being inactive.
Statement 54. An embodiment of the disclosure includes the article according to statement 53, wherein determining that the process is inactive includes periodically determining that the process is inactive.
Statement 55. An embodiment of the disclosure includes the article according to statement 35, wherein limiting the user to no more than the number of resources of the first type in the computational storage unit includes reporting an error.

Consequently, in view of the wide variety of permutations to the embodiments described herein, this detailed description and accompanying material is intended to be illustrative only, and should not be taken as limiting the scope of the disclosure. The above embodiments may be modified within the scope of the following claims.

## Claims

1. A computational storage unit, comprising:
a first resource of a first type;
a second resource of the first type;
a table mapping a user identifier, UID, for a user to a number of resources of the first type.

2. The computational storage unit according to claim 1, wherein the computational storage unit is configured to limit a user device of the user to the number of resources of the first type.

3. The computational storage unit according to claim 1 or 2, wherein the table includes:
a first table mapping the UID for the user to a Service Level Agreement, SLA, identifier, SLA ID; and
a second table mapping the SLA ID to the number of resources of the first type.

4. The computational storage unit according to any one of claims 1 to 3, further comprising a session context indicating that the first resource is used by a session of a user device of the user.

5. The computational storage unit according to claim 4, further comprising a second table mapping the UID to a number of used resources of the first type of the computational storage unit based at least in part on the session context.

6. The computational storage unit according to any one of claims 1 to 5, further comprising a reclamation unit to reclaim resources based at least in part on an activity status associated with a user device of the user.

7. A method, comprising:
receiving a request at a computational storage unit from a user device of a user to use the computational storage unit, the request identifying a resource of a first type of the computational storage unit;
determining a number of resources of the first type to which the user device should have access; and
limiting the user device to a maximum number of resources of the first type in the computational storage unit.

8. The method according to claim 7, wherein determining the number of resources of the first type to which the user device should have access includes accessing the number of resources of the first type to which the user device should have access from a table.

9. The method according to claim 8, wherein accessing the number of resources of the first type to which the user device should have access from the table includes:
accessing a Service Level Agreement, SLA, identifier, SLA ID, associated with a user identifier, UID, for the user from the table; and
accessing the number of resources of the first type associated with the SLA ID form a second table.

10. The method according to any one of claims 7 to 9, further comprising initializing the table with the number of resources of the first type to which the user device should have access.

11. The method according to any one of claims 7 to 10, wherein limiting the user device to a maximum number of resources of the first type in the computational storage unit includes:
determining a second number of resources of the first type requested in the request;
determining a third number of used resources of the first type; and
comparing the second number of resources of the first type and the third number of used resources of the first type with the number of resources of the first type.

12. The method according to any one of claims 7 to 11, further comprising updating a table of resources used by the user device based at least in part on the request.

13. The method according to claim 12, further comprising:
receiving a second request at the computational storage unit from the user device to use the computational storage unit; and
updating the table of resources used by the user device based at least in part on the second request.

14. The method according to claim 13, wherein updating the table of resources used by the user device based at least in part on the second request includes:
determining a second number of resources of the first type requested in the second request;
determining a third number of used resources of the first type; and
comparing the second number of resources of the first type and the third number of used resources of the first type with the number of resources of the first type.

15. The method according to any one of claims 7 to 14, further comprising determining an activity status associated with the user device.
